# EUROPÄISCHE PATENTANMELDUNG

(11) **EP 1 544 830 A1**
(43) Veröffentlichungstag der Anmeldung: **22.06.2005**
(21) Anmeldenummer: 03405897.4
(22) Anmeldetag: 15.12.2003
(51) Int. Cl.: G08G 1/127, G01S 5/14

(54) **Verfahren und Vorrichtung zum Verfolgen von Artikeln**

(71) Anmelder: Köhler, Christian, 8003 Zürich (CH)
(72) Erfinder: Köhler, Christian, 8003 Zürich (CH)
(74) Vertreter: Walser, Peter

(57) **Zusammenfassung**

Beim erfindungsgemässen Verfahren zum Verfolgen eines Artikels beim Warentransport wird der Artikel mit einem maschinenlesbaren Identifikationsmittel, bspw. einem Radiofrequenztransponder, versehen und in einem Frachtbehälter oder Frachtraum versendet. Beim Einbringen des Artikels in den Frachtraum wird das Identifikationsmittel gelesen und daraus eine Artikelidentifikation bestimmt. Beim oder nach dem Transportieren des Artikels im Frachtraum wird automatisch die geografische Position des Frachtbehälters oder Frachtraums bestimmt, bspw. mittels GPS. Die Artikelidentifikation und die geografische Position werden automatisch, bspw. über GSM, an eine zentrale Einheit übermittelt. Gemäss der Erfindung ist also vorgesehen, dass die Mittel zur Erkennung und zur geografischen Positionsbestimmung an den Frachtbehälter oder Frachtraum gekoppelt werden.

## Beschreibung

Die Erfindung betrifft den Transport und die Lagerung von Waren. Im Speziellen geht es um die Artikel-Überwachung bzw. -verfolgung (das ,item tracking').

Kurier- und Speditionsfirmen sehen sich zunehmend in der Situation, grosse Warenoder Briefpostvolumen rasch an eine Vielzahl von Destinationen transportieren zu müssen. Dies bringt einen grossen Logistik-Aufwand mit sich. Ausserdem lagern solche Firmen zunehmend den eigentlichen Warentransport an Kleinunternehmer oder spezialisierte Transportfirmen aus. Aus diesen Gründen wird es zunehmend schwierig, die aktuelle Position aller zu versendenden Artikel oder zu spedierenden Waren zu kennen. Fehler häufen sich.

Gemäss dem Stand der Technik werden zu versendende Artikel bzw. deren Verpackungen mit Kennungen versehen, bspw. den bekannten Strichcodes. Mittels geeigneter Leser werden die Kennungen in Speditionszentren erkannt und auf Basis von gespeicherten Informationen dem passenden Speditionskanal (bspw. einen Behälter für die Luftpostsendung an einen bestimmten Ort) zugewiesen. Nachteilig ist dabei, dass die Artikel kaum mehr auffindbar sind, wenn einmal eine Fehlleitung stattfand, bspw. wenn ein Artikel beim falschen Spediteur landet.

Die US-Patentanmeldungspublikation 2003/0107515 zeigt ein Kennzeichen mit einem Radiofrequenz-Antwortsendegerät gekoppelt an ein Global-Positioning-System'-(GPS-)Modul. Das Kennzeichen soll an einen Artikel angeheftet ermöglichen, die Position des Artikels jederzeit zu bestimmen. Dieses System würde zwar theoretisch die für das ,item tracking' notwendige Information liefern. In der Praxis bestehen aber grosse Nachteile: Damit das System funktionieren kann und eine Positionierung auch über grosse Distanzen möglich ist, muss jedes Kennzeichen über eine potente Energiequelle verfügen. Wenn ein herkömmliches passives Antwortsendegerät - solche Beziehen die ganze erforderliche Energie aus einer von einem Lesegerät ausgehenden Anregungswelle - verwendet wird, ist die Reichweite auf höchstens einige Meter beschränkt. Aus diesem Grund ist das Kennzeichen der US-A-2003/0107515 für Lösungen der obigen Problematik gänzlich ungeeignet.

Die US-Patentanmeldungspublikation 2002/0089434 skizziert Vorschläge für das ,tracking' von Personen und Gegenständen. Ein Radiofrequenz-Antwortsendegerät ist bspw. an einen Raum oder Frachtraum gekoppelt und erfasst Personen/Gegenstände, welche mit einem Kennzeichen versehen sind. Gemäss einer gegen Manipulationen gesicherten Ausführungsform ist vorgesehen, dass in einem Alarmfall, bspw. dem unautorisierten Entfernen einer Frachteinheit, ein GPS-Modul mit einem Modem aktiviert und die Position der entfernten Einheit an eine Zentrale übermittelt wird. Dieses System ist gemacht für die Verwaltung eines Lagers, bietet aber keine Lösungsvorschläge für die eingangs geschilderte Problematik. Ausserdem stellt sich die Frage nach der Datenverlässlichkeit, da Fehlbuchungen vorkommen können.

Es ist Aufgabe der Erfindung, ein Verfahren eine Vorrichtung für das Verfolgen von Waren zur Verfügung zu stellen, welches erlaubt, die Position von Waren während eines Speditionsvorganges zu bestimmen. Das Verfahren soll vorzugsweise auch bei Fehlleitungen der Waren funktionieren.

Beim erfindungsgemässen Verfahren zum Verfolgen eines Artikels beim Warentransport wird der Artikel mit einem maschinenlesbaren Identifikationsmittel, bspw. einem Radiofrequenztransponder, versehen und in einem Frachtbehälter oder Frachtraum versendet. Beim Einbringen des Artikels in den Frachtraum wird das Identifikationsmittel gelesen und daraus eine Artikelidentifikation bestimmt. Beim oder nach dem Transportieren des Artikels im Frachtraum wird immer automatisch und vorzugsweise wiederholt die geografische Position des Frachtbehälters oder Frachtraums bestimmt, bspw. mittels GPS. Die Artikelidentifikation und die geografische Position werden automatisch, bspw. über GSM (oder UMTS, GPRS, RF, ...) und vorzugsweise zusammen, an eine zentrale Einheit übermittelt. Vorzugsweise verfolgt die Übermittlung während der Fahrt häufig und bspw. periodisch, so dass eine Positionsinformation von der zentralen Einheit laufend aufdatierbar ist.

Gemäss der Erfindung ist also vorgesehen, dass die Mittel zur Erkennung und zur geografischen Positionsbestimmung an den Frachtbehälter oder Frachtraum gekoppelt werden. Die Kopplung einer Erkennungs- und Lokalisierungseinheit an den Frachtbehälter oder Frachtraum hat Vorteile: Es ist sichergestellt, dass die der gemeldete Standort der Ware dem effektiven Ort entspricht, d.h. Fehlleitungen (Einladen in den falschen Frachtraum) oder Verluste werden automatisch erkannt. Trotzdem lässt sich das Problem der für die Lokalisierung notwendigen Energieversorgung einfach lösen. Ein Frachtraum oder Frachtbehälter verfügt nämlich im Allgemeinen ohnehin über eine Energiequelle, an welche die Erkennungs- und Lokalisierungseinheit gekoppelt werden kann. Auch wenn das nicht der Fall ist, wird pro Frachtbehälter/Frachtraum lediglich eine Energiequelle benötigt. Ein weiterer Vorteil ist, dass pro Fracht nur eine Erkennungs- und Lokalisierungseinheit benötigt wird.

Die Erkennungs- und Lokalisierungseinheit weist gemäss einem Aspekt der Erfindung drei Elemente auf:
- Ein Erkennungsmittel zum automatischen (das heisst auf Basis von maschinell gelesenen Daten) Erkennen einer Artikelidentifikation der Warenartikel
- Ein Positionsbestimmungsmittel zum Bestimmen der geografischen Position
- Ein Kommunikationsmittel zum automatischen und wiederholten Übermitteln der Position und einer Artikelidentifikation an eine zentrale Einheit.

Das Erkennungsmittel der individuellen Warenartikel kann ein sogenannter RFID-Leser sein, der mit passiven (oder eventuell aktiven) Identifikationsmitteln auf den Waren oder deren Verpackung zusammenwirkt. Alternativ dazu kann es auch ein optischer Leser zum Erkennen von Markierungen, bspw. Strichcodes sein.

Besonders bevorzugt wird ein RFID-Leser verwendet, welcher mit einem Radiofrequenz-Transponder als Artikel-Identifikationsmittel zusammen wirkt. Diese Ausführungsform hat wichtige Vorteile im Vergleich zum konventionellen Strichcode: Sie ermöglicht das Lage-unabhängige Erfassen der Gegenstände ohne direkten Sichtkontakt.

Das Positionsbestimmungsmittel kann ein an sich konventioneller GPS-Chip oder ein anderes Modul eines globalen oder lokalen Positionserkennungssystems sein.

Das Kommunikationsmittel kann auf GSM, UMTS oder einem vergleichbaren Standard beruhen. Es kann bspw. über General Packet Radio Service (GPRS) oder Short Message Service (SMS) oder RF,...., mit der zentralen Einheit kommunizieren.

Die zentrale Einheit kann ein Computerserver mit einem Kommunikationsmodul - im einfachsten Fall einem Modem - sein. Die zentrale Einheit kann von einem bestimmten Anwender zur Verfügung gestellt sein, oder sie kann verschiedenen Anwendern zur Verfügung stehen. Sie verfügt über die nötige Software, um die Artikelidentifikationen und Positionsdaten zu verwalten und auszuwerten.

Gemäss dem Verfahren zum Überwachen von Artikeln wird die Erkennungs- und Lokalisierungseinheit so am Frachtbehälter oder Frachtraum angebracht, dass darin vorhandene Artikel automatisch erfasst werden. Die entsprechende Artikelidentifikation wird in einem Datenspeicher der Erkennungs- und Lokalisierungseinheit abgelegt. Die Artikelidentifikation der im Frachtbehälter oder Frachtraum befindlichen Artikel wird an die zentrale Einheit übermittelt. Auch die Position des Frachtbehälters oder Frachtraums geht an die zentrale Einheit, entweder gleichzeitig oder zeitlich versetzt.

Die Erfassung der Artikel kann bspw. erfolgen, indem die Erkennungs- und Lokalisierungseinheit am Eingang des Frachtbehälters oder Frachtraums angebracht und so positioniert wird, dass alle in den Frachtbehälter oder Frachtraum hineingehenden bzw. aus diesem entfernten Artikel erfasst werden. Alternativ oder ergänzend dazu kann ein Erkennungsmodul, wenn es als RFID-Leser ausgebildet ist, auch einmal oder wiederholt alle im Frachtbehälter oder Frachtraum vorhandenen Artikelidentifikationen abfragen.

Gemäss einem besonders bevorzugten Ausführungsbeispiel wird die einen RFID-Leser aufweisende Erkennungs- und Lokalisierungseinheit an einen Verschlussmechanismus des Frachtbehälters oder Frachtraums gekoppelt, bspw. an die Türe eines Lastwagen-Frachtraums oder den Verschluss eines Kontainers. Ein Öffnen der Türe bzw. des Verschusses aktiviert das Erkennungsmittel. Wenn die Türe bzw. der Verschluss geschlossen wird, werden das Positionsbestimmungsmittel und das Kommunikationsmittel aktiviert. Die gespeicherten Daten werden zusammen mit Positionsdaten an die zentrale Einheit gesandt. In der Folge kann bei Bedarf die Position des Frachtbehälters oder Frachtraums durch wiederholte Abfragen laufend aktualisiert werden. Ein erneutes Öffnen der Türe bzw. des Verschlusses aktiviert erneut die Erkennungs- und Lokalisierungseinheit.

Gemäss bevorzugten Ausführungsformen wird beim oder nach dem Einbuchen von Artikeln, d.h. beim oder nach dem Erkennen der Artikel als in den Frachtraum oder Frachtbehälter eingeladen, eine Diskriminierungsinformation ermittelt. Diese dient dazu, wirklich in den Frachtraum gelangte Artikel von Artikeln zu unterscheiden, welche nur in die Nähe des Erkennungsmittels gelangt sind.

Das dazu vorhandene Diskriminierungsmittel kann bspw. darin bestehen, dass in Einladerichtung zwei RFID-Leser hintereinandergeschaltet werden. Gemäss einer ersten Variante wird ein Artikel nur dann als eingeladen erkannt, wenn er von beiden Lesern - bspw. innerhalb eines bestimmten, kurzen Zeitintervalls - erkannt wurde. Gemäss einer zweiten Variante gilt er nur dann als eingeladen, wird also eingebucht, wenn er vom zweiten Leser erkannt wurde und nur dann als wieder ausgeladen, also ausgebucht, wenn er von ersten Leser erkannt wurde. Dieses Hystereseprinzip bewirkt ebenfalls eine Datenverlässlichkeit.

Alternativ oder ergänzend dazu kann zur Diskriminierung ein Erkennungsmittel, bspw. ebenfalls der RFID-Leser und/oder ein oder mehrere ergänzende RFID-Leser zu einem bestimmten Zeitpunkt durch eine Signalanforderung die Anwesenheit aller eingebuchter Artikel abfragen und bei ihnen ein Anwesenheitssignal anfordern. Diese Abfrage kann unspezifisch sein und alle in der Umgebung vorhandenen Artikel mit einschliessen. Alternativ dazu kann sie auch spezifisch sein und bspw. auch Signalanforderungen an alle seit der letzten Abfrage ausgebuchten Artikel mit umfassen.

Ausserdem kann ein Erkennungsmittel, bspw. ein RFID-Leser sich während des Abfragevorgangs entlang einer vorgegebenen Bahn bzw. Trajektorie bewegen, um auch bei beschränkter Reichweite alle Artkikel ansprechen zu können. Bspw. kann es entlang einer Schiene an der Frachtraumwand durch einen aktiven Antrieb bewegt werden.

Ausserdem ermöglicht die Erfindung auch das Zusammenspiel zwischen der erfindungsgemässen Erkennungs- und Lokalisierungseinheit einerseits und einem Dokumentierungsmittel der für die Fracht verantwortlichen Person. Ein solches Dokumentierungsmittel kann bspw. ein sog. an sich bekannter ,personal digital assistant (PDA)' eines Eilboten sein, mit dem die Auslieferungen an die gewünschte Destination protokolliert werden. (Bspw. sind PDAs bekannt, in welche direkt mittels eines 'touch-screen' Unterschriften des Empfängers, mit welchen der Empfang bestätigt wird, einlesbar sind.) Es kann vorgesehen sein, dass die Ablieferung der Ware an den Empfänger vom PDA direkt ans Modul weitergeleitet und dort protokolliert und/oder von dort an die zentrale Einheit übermittelt wird.

Im Folgenden werden Ausführungsbeispiele der Erfindung anhand von Zeichnungen beschreiben. In den schematischen Zeichnungen zeigen:
- Figuren 1 und 2 Schritte im Ablauf des erfindungsgemässen Verfahrens
- Figur 3 ein Schema einer Erkennungs- und Lokalisierungseinheit mit einem RFID-Label und einer zentralen Einheit.
- Figuren 4-6 schematisch Mittel zum Erkennen von Fehleinbuchungen.

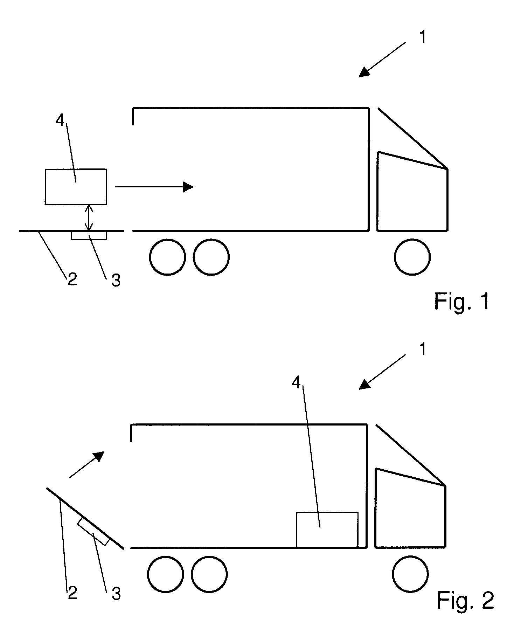

In Figur 1 ist ein Frachtraum 1 dargestellt, nämlich der Laderaum eines Lastwagens. Der Frachtraum besitzt eine verschliessbare Frachtraum-Türe 2. An dieser oder in der Nähe dieser ist eine Erkennungs- und Lokalisierungseinheit 3 befestigt, welche einen RFID (Radio-Frequenz-Identifikations)-Leser und eine Energiequelle beinhaltet. Ein Erkennungsmodul der Erkennungs- und Lokalisierungseinheit 3 wird durch Öffnen der Frachtraumtüre aktiviert. Im aktivierten Zustand sendet das Erkennungsmodul bspw. periodisch, in einem Takt von bspw. zwischen 0,1 s und 1 s ein Aktivierungssignal aus.

Frachtgut 4, das in den Laderaum geladen wird, besitzt ein RFID-Label (bzw. eine RFID-Etikette), bspw. einen (passiven) Radiofrequenztransponder. Ein solches Label beinhaltet Mittel zum Aussenden eines Identifikationssignales beim oder nach dem Empfang eines Aktivierungssignales durch den Leser. Das entsprechende Identifikationssignal wird ausgewertet und die entsprechende Identifikation des Artikels wird in einem Datenspeicher gespeichert. Frachtgut, das aus dem Laderaum ausgeladen wird - in einem besonders einfachen Ausführungsbeispiel der Erfindung wird es dadurch erkannt, dass es sich zum zweiten Mal in Reichweite des Erkennungsmoduls befindet - wird im Datenspeicher entsprechend gekennzeichnet oder aus diesem gelöscht.

Nach Schliessen der Frachtraum-Türe 2 (Figur 2) wird das Erkennungsmodul deaktiviert. Gleichzeitig kann ein Lokalisierungsmodul der Erkennungs- und Lokalisierungseinheit aktiviert werden. Ein solches ist bspw. als GPS-Modul ausgestaltet und ermittelt periodisch seine Position. Die Position wird zusammen mit einer Zusammenstellung der Identifikationen aller im Frachtraum befindlichen und im Datenspeicher entsprechend vermerkten Artikel über Kommunikationsmittel an die zentrale Einheit übermittelt. Alternativ dazu kann zur Verminderung des Datenverkehrs auch nur unmittelbar nach Verschliessen des Frachtraums die Aufstellung der vorhanden Artikel übermittelt werden, wohingegen im Folgenden nur die Position periodisch an die zentrale Einheit übersandt wird. Gemäss noch einer Alternative werden sowohl Position als auch Informationen über die im Frachtraum befindlichen Artikel nur beim Öffnen und Schliessen der Frachtraum-Türe sowie ggf. bei anderen Ereignissen - bspw. einer Anfrage durch die zentrale Einheit - übermittelt. Auch Temperatur und/oder Druck im Frachtbehälter oder Frachtraum können überwacht und ggf. an die Zentrale übermittelt werden oder alternativ bei gewissen Grenzwertüberschreitungen eine Übermittlung von Signalen an die Zentrale auslösen.

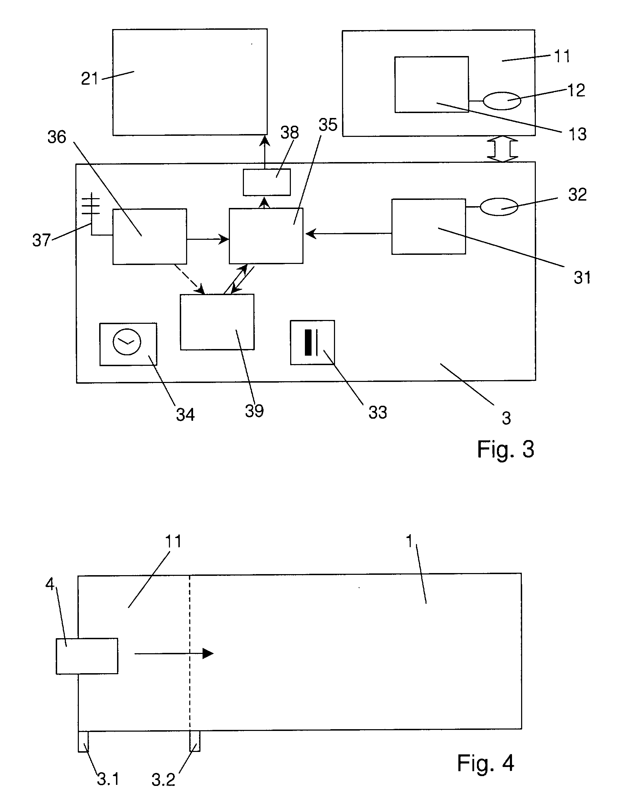

Der Aufbau einer Erkennungs- und Lokalisierungseinheit ist schematisch in **Figur 3** dargestellt.

Ein maschinenlesbares Identifikationsmittel besitzt einen Radiofrequenz-Transponder 11. Es kann als Etikette ausgebildet sein, welche auf den zu transportierenden Artikel oder eine Verpackung aufgebracht wird. Falls der Artikel später an Konsumenten verkauft werden sollen, empfiehlt es sich, aus Datenschutzgründen die Etikette nicht direkt am Artikel sondern an seiner Verpackung zu befestigen. Der Radiofrequenztransponder 11 besitzt eine Antenne 12 zum Empfangen von Energie und Informationen sowie Datenübertragungs- und Speichermittel 13, in welchen eine Artikelidentifikation gespeichert ist. Solche Radiofrequenztransponder sind an sich bekannt; sie sollen hier nicht weiter erklärt werden. Als Etiketten können sie selbstklebende Papieretiketten mit eingeschlossenen 'Smart'-Label (d.h. Radiofrequenz-Transpondern) sein, die ausserdem bedruckt sind mit bspw. Adressat, Absender oder Logo, etc.

Die Erkennungs- und Lokalisierungseinheit 3 besitzt ein Lesemodul mit einem Lesechip 31 und einer Antenne 32. Lesemodule zum Auslesen von Daten aus Radiofrequenztranspondern 11 sind ebenfalls an sich bekannt. Die Lesedistanz ist bspw. von der Grössenordnung 0,2 m bis 2 m. Das Erkennungsmodul muss wie in Figur 3 schematisch dargestellt zusammen mit den übrigen Elementen der Erkennungs- und Lokalisierungseinheit in einem Gehäuse angeordnet sein. Es kann auch separat angeordnet sein und eventuell auch als Handleser ausgebildet sein. Ein Handleser wird von einer für das Frachtgut zuständigen Person an die Identifikationsmittel gehalten. Das Erkennungsmodul kann ausserdem ein Mittel aufweisen, um das Erkennen eines Artikels zu quittieren, bspw. durch ein hörbares Geräusch oder durch eine optisch sichtbare Anzeige.

Zusätzlich weist die Erkennungs- und Lokalisierungseinheit 3 einen Datenverarbeitungschip 35, einen Datenspeicher 39, einen GPS-Chip 36 mit GPS-Empfangsmitteln 37 sowie ein Kommunikationsmodul 38 auf. Die Erkennungs- und Lokalisierungseinheit besitzt Energieversorgungsmittel 33, welche beispielsweise als Batterie ausgestaltet sein können. Alternativ dazu können die Energieversorgungsmittel auch einen Anschluss an Energieversorgungsmittel des Frachtbehälters oder Frachtraums anschliessen, bspw. via Kopplung an eine Lastwagenbatterie. In der Figur gezeichnet ist weiter noch ein - hier unabhängig dargestelltes - Zeitglied 34.

Der Datenverarbeitungschip steuert den Datenaustausch zwischen dem Lesemodul, dem GPS-Chip, dem Datenspeicher und dem Kommunikationsmodul. Der Datenspeicher beinhaltet immer eine aktuelle Liste der im Frachtbehälter oder Frachtraum befindlichen Artikel. Ausserdem kann im Datenspeicher auch die geografische Position - zusammen mit der aktuellen Zeit - abgespeichert werden.

Über das Kommunikationsmodul 38 können Daten an die zentrale Einheit 21 übermittelt werden. Dies kann unmittelbar nach der Bestimmung der geografischen Position in Echtzeit geschehen. Alternativ oder ergänzend dazu kann, insbesondere wenn gerade keine Kommunikationsverbindung besteht - bspw. wenn sich der Frachtbehälter oder Frachtraum an einem Ort ohne GSM-Verbindung befindet - die Position auch im Datenspeicher abgelegt und zu einem späteren Zeitpunkt übermittelt werden.

Es kann auch eine Liste der zu ladenden Fracht von der Zentrale an die Einheit übermittelt werden. Neue Auftragseingänge kommen zuerst an die Zentrale, diese können dann entweder manuell oder automatisch (Optimierung via Algorithmus) an das Ladehilfsmittel gesendet werden. Auch weitere Informationen wie bspw. Die kurzfristige Stornierung eines Auftrags etc können von der Zentrale übermittelt werden. Der Fahrer erhält die Information über sein PDA bzw. mobile device.

Abweichend vom vorgängig beschriebenen Verfahren sind weitere Ausführungsformen denkbar. Beispielsweise kann anstelle der Bestimmung der Artikelidentifikationen beim Einladen auch eine Identifizierung der Artikel im bereits geschlossenen Frachtbehälter oder Frachtraum stattfinden. Es kann vorgesehen sein, dass ein Erkennungsmodul die Identifikationsdaten aller im Frachtbehälter vorhandenen Artikel während des Warentransports immer wieder und/oder einmal nach Verschliessen des Frachtbehälters oder Frachtraums abfragt.

Alternativ dazu ist denkbar, dass die Erkennungs- und Lokalisierungseinheit mehr als ein Erkennungsmodul aufweist. Dies dient dazu, dass eine Diskriminierungsinformation ermittelt wird: Es wird unterschieden zwischen wirklich in den Frachtbehälter oder Frachtraum gelangten Artikeln und Fehleinbuchungen, welche zustande kamen, weil bspw. ein Artikel in der Nähe des Eingangs gelagert oder vorbeigetragen wurde. Bspw. kann ein erstes, verhältnismässig kurzreichweitiges Erkennungsmodul wie vorstehend dargelegt bei einem Frachtbehälter- oder Frachtraum-Verschluss angebracht sein und die Artikel erfassen, wenn sie ein- oder ausgeladen werden. Ein zweites, langreichweitigeres Erkennungsmodul überprüft bspw. nach Verschliessen des Frachbehälter- oder Frachttraum-Verschlusses einmal oder immer wieder, ob alle gemäss dem ersten Erkennungsmodul vorhanden Artikel sich auch tatsächlich im Frachtraum befinden. Dadurch kann die Sicherheit erhöht werden, und es ist ausgeschlossen, dass ein sich kurzfristig in der Nähe des Frachtbehälter- oder Frachtraumverschlusses befindender, aber nicht eingeladener Artikel als im Frachbehälter oder Frachtraum befindlich verbucht wird. Das erste und das zweite Erkennungsmodul können in dieser Ausführungsform identisch auch sein.

Eine alternative Ausgestaltung der Diskriminierungsmittel ist in Figur 4 dargestellt. Der Frachtbehälter oder Frachtraum 1 (die Figur stellt bspw. schematisch einen Lastwagen-Frachtraum von oben dar) besitzt einen Eingangsbereich 1.1, bspw. eine Laderampe. Alle einzuladenden Artikel müssen notwendigerweise den Eingangsbereich passieren. Im Eingangsbereich sind zwei Erkennungsmodule 3.1, 3.2 einer Erkennungs- und Lokalisierungseinheit angebracht. Gemäss einer ersten Variante werden nur Artikel eingebucht und als im Frachtbehälter oder Frachtraum vorhanden vermerkt, welche zuerst vom ersten und anschliessend vom zweiten Erkennungsmodul erfasst worden sind. Es kann die Bedingung gesetzt sein, dass dies innerhalb eines bestimmten zeitlichen Intervalls zu geschehen hat, bspw. innerhalb von maximal 10 oder 5 Sekunden. Gemäss einer zweiten Variante werden die Artikel nur durch das zweite Modul 3.2 eingebucht und nur durch das erste Modul 3.1 wieder ausgebucht. Das zugrunde liegende Prinzip ist (mit dem Ort als Variable) mit einer Hysterese einer Schaltung zu vergleichen; auch so ist sichergestellt, dass jeder Artikel, der eingebucht wurde und den Eingangsbereich wieder verlässt, auch wieder ausgebucht wird.

Zusätzlich oder alternativ dazu kann noch vorgesehen sein, dass bei Einbuchungen ein akustisches Signal erklingt, welches der Person, welche den Frachtbehälter oder Frachtraum belädt als Quittiersignal dient. Bei einer Fehlbuchung - bspw. einem Erkennen des Artikels nur durch das erste Modul 3.1 in der obenstehenden Ausführungsform - kann ein anderes akustisches Signal als Warnsignal erklingen. Auch bei einer Ausbuchung kann ein charakteristisches Signal erzeugt werden.

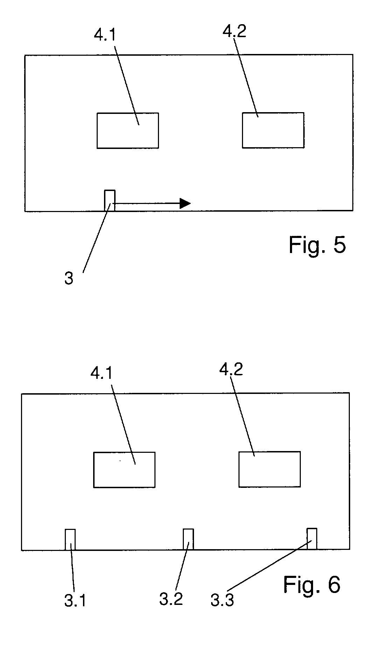

In der Ausführungsform gemäss **Figur 5** wird ebenfalls, bspw. nach dem Schliessen der Laderaumtüre, die Anwesenheit aller im Laderaum vorhandenen Artikel 4.1, 4.2 erfasst. Bei einer beschränkten Reichweite des Erkennungsmoduls kann dieses oder die ganze Erkennungs- und Lokalisierungseinheit 3 beweglich gelagert und bspw. aktiv entlang einer Schiene verschoben werden, damit alle Artikel erfasst werden.

Gemäss **Figur 6** wird eine gegebenenfalls zu kurze Reichweite dadurch kompensiert, dass eine Mehrzahl von Erkennungsmodulen 3.1, 3.2, 3.3 vorhanden ist, deren Empfangsbereiche in der Summe den ganzen Laderaum abdecken.

Weitere Ausführungsformen der Erfindung sind denkbar, beispielsweise die Verwendung von optischen (Strichcode-)Lesern an Stelle von Radiofrequenzidentifikaitonssystemen.

## Patentansprüche

1. Verfahren zum Verfolgen eines Artikels beim Warentransport, wobei der Artikel in einem Frachtbehälter oder Frachtraum versendet wird, aufweisend folgende Verfahrensschritte:
- Anbringen eines maschinenlesbaren Identifikationsmittels an den Artikel oder eine Verpackung des Artikels,
- beim oder nach dem Einbringen des Artikels in den Frachtraum, maschinelles Lesen des maschinenlesbaren Identifikationsmittels und Bestimmen einer Artikelidentifikation anhand gelesener Daten,
- Transportieren des Artikels im Frachtbehälter oder Frachtraum durch Transportieren des Frachtbehälters oder Frachtraums,
- während oder nach dem transportieren des Artikels, automatisches Bestimmen der geografischen Position des Frachtbehälters oder Frachtraums und
- automatisches und wiederholtes Übermitteln der Artikelidentifikation und der geografischen Position an eine zentrale Einheit.

2. Verfahren nach Anspruch 1, **dadurch gekennzeichnet, dass** das maschinenlesbare Identifikationsmittel einen Radiofrequenz-Transponder beinhaltet und dass ein Radiofrequenz-Datenerfassungsgerät direkt an den Frachtbehälter oder Frachtraum gekoppelt ist.

3. Verfahren nach Anspruch 2, **dadurch gekennzeichnet, dass** das Radiofrequenz-Datenerfassungsgerät an ein Modul für die Positionsbestimmung basierend auf Satellitensignalen für die Bestimmung der Position des Frachtbehälters gekoppelt ist.

4. Verfahren nach einem der vorangehenden Ansprüche, **dadurch gekennzeichnet, dass** Artikelidentifikation und Position über ein bestehendes Telekommunikationsnetz übermittelt werden.

5. Verfahren nach einem der vorangehenden Ansprüche, **dadurch gekennzeichnet, dass** durch die Erkennungsmittel durch Öffnen oder Schliessen eines Frachtbehälter- bzw. Frachtraumverschlusses aktiviert oder deaktiviert werden.

6. Verfahren nach Anspruch einem der vorangehenden Ansprüche, wobei beim oder nach dem Einbringen des Artikels in den Frachtraum eine Diskriminationsinformation evaluiert wird, mit welcher tatsächlich in den Frachtraum gelangte Artikel von Fehleinbuchungen unterscheidbar sind,

7. Verfahren nach Anspruch 6, **dadurch gekennzeichnet, dass** das Ermitteln der Diskriminationsinformation beinhaltet, dass die maschinenlesbaren Identifikationsmittel durch zwei in einer Einladerichtung hintereinandergeschaltete Erkennungsmittel auslesbar sind werden, wobei ein Artikel nur dann als eingeladen gilt, wenn er von beiden Erkennungsmittel erkannt worden ist.

8. Verfahren nach Anspruch 7, **dadurch gekennzeichnet, dass** bei einer Einbuchung und/oder bei einer Fehlbuchung ein je charakteristisches Signal ertönt.

9. Verfahren nach Anspruch 7 oder 8, **dadurch gekennzeichnet, dass** das Ermitteln der Diskriminationsinformation beinhaltet, dass an einem bestimmten Zeitpunkt, beispielsweise nach einem Verschliessen des Frachtbehälters, ein Anwesenheitssignal von allen identifizierten Artikeln abgerufen wird.

10. Verfahren nach Anspruch 9, **dadurch gekennzeichnet, dass** ein Leser zum Abrufen des Anwesenheitssignales entlang einer vorgegebenen Trajektorie bewegt wird und dabei kontinuierlich Anwesenheitssignale der Artikel erfasst.

11. System zum Verfolgen von Artikeln, welche in einem Frachtbehälter oder Frachtraum versendet werden, zur Verwendung in einem Verfahren nach einem vorangehenden Ansprüche, aufweisend eine Mehrzahl von an den Artikeln anzubringenden maschinenlesbaren Identifikationsmitteln sowie eine an den Frachtbehälter oder Frachtraum koppelbare Erkennungs- und Lokalisierungseinheit mit
- einem Erkennungsmittel zum Auslesen der maschinenlesbaren Etiketten der Warenartikel und zum Bestimmen einer Artikelidentifikation aus den ausgelesenen Daten,
- Einem Diskriminierungsmittel, mit welcher tatsächlich in den Frachtraum gelangte Artikel von Fehleinbuchungen unterscheidbar sind,
- einem Positionsbestimmungsmittel zum automatischen Bestimmen der aktuellen geografischen Position der Erkennungs- und Lokalisierungseinheit und
- einem Kommunikationsmittel zum automatischen Übermitteln der geografischen Position und der Artikelidentifikationen an eine zentrale Einheit.

12. System nach Anspruch 11, **gekennzeichnet durch** Mittel zum Aktivieren/Deaktivieren der Erkennungsmittel je nach dem ob ein Frachtbehälter- oder Frachtraumverschluss geöffnet oder geschlossen ist.

13. An einen Frachtbehälter oder Frachtraum koppelbare Erkennungs- und Lokalisierungseinheit für ein System nach einem der Ansprüche 11 oder 12, aufweisend
- Ein Erkennungsmittel zum Auslesen von maschinenlesbaren Identifikationsmitteln der Warenartikel und zum Bestimmen einer Artikelidentifikation aus den ausgelesenen Daten
- Ein Positionsbestimmungsmittel zum automatischen Bestimmen der aktuellen Position der Erkennungs- und Lokalisierungseinheit
- Ein Kommunikationsmittel zum automatischen Übermitteln der Position und der Artikelidentifikationen an eine zentrale Einheit.

14. Erkennungs- und Lokalisierungseinheit nach Anspruch 13, **dadurch gekennzeichnet, dass** das Erkennungsmittel ein Radiofrequenz-Datenerfassungsmodul aufweist und so ausgebildet ist, dass es einen passiven Radiofrequenztransponder mit Energie versorgen kann.
